(19) **Europäisches Patentamt**

**European Patent Office**

**Office européen des brevets**

(11) **EP 1 726 936 A1**

(12) **EUROPÄISCHE PATENTANMELDUNG**

(43) Veröffentlichungstag:
   **29.11.2006 Patentblatt 2006/48**

(51) Int Cl.:
   **G01L 25/00** (2006.01)   **G01L 1/22** (2006.01)
   **G01R 17/10** (2006.01)

(21) Anmeldenummer: **06010592.1**

(22) Anmeldetag: **23.05.2006**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(30) Priorität: **25.05.2005 DE 102005024020**

(71) Anmelder: **Hottinger Baldwin Messtechnik GmbH**
   **64293 Darmstadt (DE)**

(72) Erfinder: **Kreuzer, Manfred**
   **64331 Weiterstadt (DE)**

(74) Vertreter: **Behrens, Helmut**
   **Gross-Gerauer Weg 55**
   **64295 Darmstadt (DE)**

(54) **Vorrichtung und Verfahren zum Kalibrieren von Dehnungsmesschaltungen**

(57) Die Erfindung betrifft ein Verfahren zur Verbesserung der Genauigkeit von Shuntkalibrierungen bei Dehnungsmessstreifen-Vollbrückenschaltungen, wenn längere Aufnehmeranschlusskabel verwendet werden. Dabei sind die Dehnungsmessschaltungen (A) über mehradrige Anschlussleitungen (3, 3', 1, 4, 2, 2') mit einer separaten Messverstärkerschaltung (B) verbunden, die zur Erfassung und Verstärkung der Dehnungsmesssignale dient. Die Messverstärkerschaltung (B) enthält mindestens eine Spannungsregelungsschaltung, die die Spannungsabfälle (ΔU) auf den Anschlussleitungen (3, 2) nachregelt. Zusätzlich ist in der Messverstärkerschaltung (B) eine Kalibrierschaltung integriert, die aus mindestens einem zuschaltbaren Kalibrierwiderstand ($R_{Shunt}$) besteht, nach dessen Zuschaltung ($S_2$, $S_3$) ein Kalibriersignal erzeugt wird, das als Messsignal einer definierten Dehnungsänderung erfassbar ist. Die Erfindung ist dadurch gekennzeichnet, dass in der Kalibrierschaltung ($V_3'$, $V_2'$, R1, R2, $R_{Shunt}$, $S_3$, $S_2$) zusätzliche elektronische Schaltelemente vorgesehen sind, die den Spannungsabfall (ΔU) auf mindestens einer der Speisespannungsleitungen (3, 2) erfassen. Die Kalibrierschaltung ($V_3'$, $V_2'$, R1, R2, $R_{Shunt}$, $S_3$, $S_2$) ist dabei so ausgebildet, dass sie den Kalibrierwiderständen ($R_{Shunt}$) zum Kalibrieren eine Speisespannung ($U_S$) zuführen, die um die Spannungsabfälle (ΔU) auf den Speisespannungsleitungen (3, 2) reduziert ist.

Fig. 3

**Beschreibung**

Die Erfindung betrifft eine Vorrichtung zum Kalibrieren von Dehnungsmessschaltungen gemäß dem Oberbegriff des Patentanspruchs 1 sowie ein Verfahren zur Durchführung der Kalibrierung gemäß dem Oberbegriff des Patentanspruchs 7.

In der Flugzeugindustrie werden heute vielfach Materialspannungen an größeren Tragflächen- oder Rumpfteilen im Windkanal oder in anderen Versuchsaufbauten mit Dehnungsmessschaltungen erfasst. Dazu werden vorzugsweise Dehnungsmessstreifen an der Oberfläche der zu testenden Flugzeugteile appliziert, über Anschlussleitungen mit den nachgeschalteten Messverstärkern verbunden und mittels programmgesteuerter digitaler Rechenanlagen ausgewertet. Um einen möglichst umfassenden Spannungszustand der Flugzeugteile oder anderer spannungsbelasteter Teile erfassen zu können, werden an dessen Oberflächen teilweise bis zu 7.000 Dehnungsmessstreifen befestigt. Zur Auswertung jeder Messung muss vor der Versuchsdurchführung und bei jeder Änderung des Messaufbaus oder der Umgebungsbedingungen jede Dehnungsmessschaltung nachvollziehbar kalibriert werden. Wollte man dies manuell wie bei einer einzelnen Messstelle mit Referenzwiderständen durchführen, würde dies jeweils einige Minuten in Anspruch nehmen. Deshalb kann es vorgesehen werden, die Kalibrierung durch zuschaltbare Kalibrier- oder Referenzwiderstände in den Messverstärkerschaltungen vorzunehmen.

Eine derartige Vorrichtung zum Kalibrieren von Dehnungsmessschaltungen ist aus der DE 101 20 982 A1 bekannt, die bei einer Viertelbrückenschaltung in der Messverstärkerschaltung integriert ist. Dabei sind die einzelnen Dehnungsmessstreifen auf den dehnungsbelasteten Bauteilen appliziert und über Anschlussleitungen von teilweise bis zu einigen hundert Metern Länge mit einer Verstärkerschaltung verbunden. In einer Verstärkerbaugruppe sind dann mehrere Messverstärkerschaltungen als einzelne Messkanäle vorgesehen, durch die die von den Dehnüngsmessstreifen erzeugten Messsignale ausgewertet und hochgenau verstärkt werden. Dazu sind in den Verstärkerschaltungen zwei Hilfswiderstände und ein präziser Ergänzungswiderstand vorgesehen, die mit den Dehnungsmessstreifen als so genannte Viertelbrücke zu einer Wheatstoneschen Messbrücke verschaltet sind. Die jeweils in der Messverstärkerschaltung angeordneten Hilfs- und Ergänzungswiderstände sind über mindestens eine dreiadrige Anschlussleitung mit den entfernt angeordneten Dehnungsmessstreifen verbunden. Um eine Messwertverfälschung durch den Leitungswiderstand der Anschlussleitungen zu vermeiden, ist eine Spannungsnachregelung durch einen Operationsverstärker als elektronisches Bauelement vorgesehen. Der Operationsverstärker ist zwischen einer Speise- und einer stromlosen Fühlerleitung in der Anschlussleitung geschaltet und erfasst den Spannungsabfall auf der Speisespannungsleitung.

Durch den Verstärkungsfaktor von P = 2 und eine Addierschaltung wird die Speisespannung um die Spannungsabfälle auf den beiden Speisespannungsleitungen erhöht, so dass mit dieser Spannungsnachregelung gewährleistet ist, dass sowohl am Dehnungsmessstreifen als auch am Ergänzungswiderstand, die beide gleiche Widerstandsnennwerte aufweisen, auch gleich große Spannungen anliegen. Durch Zuschaltung eines Kalibrierwiderstands als Referenzwiderstand parallel zum Ergänzungswiderstand kann die Brückenschaltung in einem weitgehend linearen Bereich verstimmt werden, so dass damit eine Kalibrierung der Dehnungsmessschaltung auch bei längeren Anschlussleitungen möglich ist. Zur Erhöhung der Genauigkeit einzelner Dehnungsmessschaltungen ist es aber häufig notwendig, diese mit zwei oder vier Dehnungsmessstreifen als so genannte Halb- oder Vollbrücke zu schalten, so dass in der Messverstärkerschaltung dann kein Ergänzungswiderstand mehr vorhanden ist, zu dem der Kalibrierwiderstand parallel anschaltbar ist.

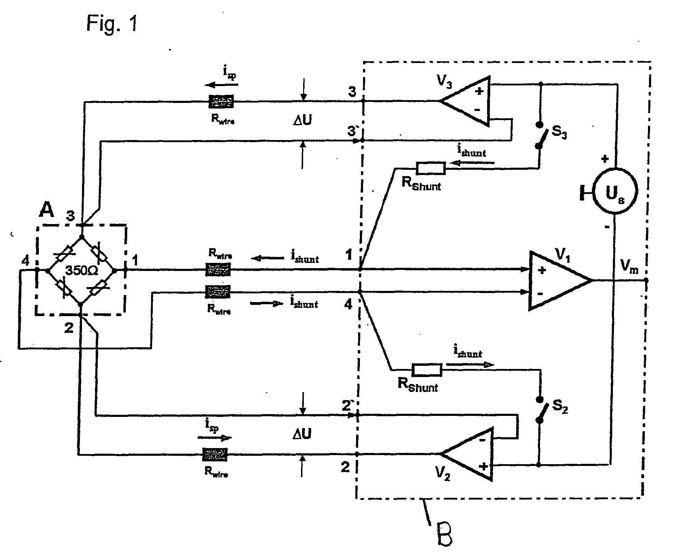

Eine derartige Dehnungsmessschaltung mit zuschaltbarem Kalibrierwiderstand innerhalb einer Messverstärkerschaltung B bei einer Dehnungsmessschaltung A in Form einer Wheatstoneschen Vollbrücke ist in Fig. 1 der Zeichnung dargestellt und als Stand der Technik bekannt. Diese Dehnungsmessschaltung A besteht aus einer Wheatstoneschen Messbrücke mit vier Dehnungsmessstreifen, die mit einer sechsadrigen Anschlussleitung 3, 3', 1, 4, 2, 2' mit der Messverstärkerschaltung B verbunden sind. Zur Erfassung und Ausregelung des Spannungsabfalls $\Delta$U auf den Speisespannungsleitungen 3, 2 sind zwei stromlose Fühlerleitungen 3', 2' vorgesehen, zwischen denen jeweils ein Operationsverstärker V2, V3 als elektronisches Bauelement geschaltet ist, der die Speisespannung $U_S$ um den Leitungsspannungsabfall $\Delta$U nachregelt. Deshalb liegt an der Messbrücke auch bei langen Anschlussleitungen stets die gleiche Speisespannung an, so dass durch den Messverstärker $V_1$ ein sehr genaues Dehnungsmesssignal $V_m$ im Diagonalzweig $A_{1,4}$ zwischen den beiden Messleitungen 1, 4 erfasst und zur Weiterverarbeitung verstärkt werden kann. Zur selbsttätigen Kalibrierung dieser Dehnungsmessschaltung A ist in der Messverstärkerschaltung B zwischen jedem Speisespannungspol der Speisespannungsquelle $U_S$ und jeweils einer der Messleitungen 1, 4 ein zuschaltbarer Kalibrierwiderstand bzw. Shuntwiderstand $R_{Shunt}$ geschaltet, der eine Verstimmung der Messbrücke bewirkt. Allerdings haben bei dieser Schaltung die Leitungswiderstände $R_{wire}$ in den Messleitungen 1, 4 einen messwertverfälschenden Einfluss auf das Kalibriersignal, da diese mit den relativ niedrigen Dehnungsmessstreifenwiderständen von meist $350\,\Omega$ in Reihe liegen, so dass der Spannungsabfall zum Messsignal hinzuaddiert wird. Bei einem derartigen Standarddehnungsmessstreifenaufnehmer A von $350\,\Omega$ als Dehnungsmessschaltung würden beispielsweise zwei Messleitungswiderstände $R_{wire}$ von je $5\,\Omega$ das Kalibriersignal um fast 3% erhöhen und somit verfälschen.

Insbesondere bei längeren Anschlussleitungen ist eine solche Schaltung zur genauen Kalibrierung nicht geeignet, sondern wird eher zu einer allgemeinen Funktionskontrolle der Aufnehmerschaltung A genutzt.

Es ist zwar denkbar, den in der Messverstärkerschaltung B zuschaltbaren Kalibrierwiderstand über jeweils zwei separate Leitungen parallel zu jeweils einem der Dehnungsmessstreifen $A_{3,1}$, $A_{4,2}$ in der externen Halb- oder Vollbrücke zu schalten. Dann läge am Kalibrierwiderstand $R_{Shunt}$ auch die um die Leitungswiderstände $R_{wire}$ verringerte Speisespannung an. Bei entsprechend hohem Kalibrierwiderstand von ca. 100 KΩ würde dann ein Kalibriersignal erzeugt, das vernachlässigbar wenig durch den Leitungswiderstand verfälscht wäre und zu einer hinreichend genauen Kalibrierung genutzt werden könnte. Eine solche Vollbrückenschaltung würde dann aber noch zusätzlich vier Leitungen erfordern (also insgesamt 10 Leitungen), was insbesondere bei einer Vielzahl von Messstellen einen erheblichen Leitungs- und Steckermehraufwand erfordert.

Der Erfindung liegt deshalb die Aufgabe zugrunde, eine Vorrichtung zum Kalibrieren von Dehnungsmessschaltungen mit externen Halb- oder Vollbrückenschaltungen als Dehnungsmessschaltungen zu schaffen, die eine hinreichend genaue Kalibrierung gewährleistet und keine zusätzlichen Leitungen erfordert.

Diese Aufgabe wird durch die in Patentanspruch 1 und 7 angegebene Erfindung gelöst. Weiterbildungen und vorteilhafte Ausführungsbeispiele sind in den Unteransprüchen angegeben.

Die Erfindung hat den Vorteil, dass mit der intern anschaltbaren Vorrichtung zum Kalibrieren von Dehnungsmessschaltungen auch weit entfernt angeordnete Dehnungsaufnehmerschaltungen in Halb- oder Vollbrückenausführung sehr genau kalibrierbar sind. Diese erfindungsgemäße Kalibriervorrichtung hat zusätzlich den Vorteil, dass gleichzeitig der Temperatureinfluss erheblich verringert wird, so dass eine Kalibrierung weitgehend unabhängig von der Umgebungstemperatur ist. Bei der erfindungsgemäßen Kalibrierschaltung ist insbesondere vorteilhaft, dass diese mit nur wenigen elektronischen Bauelementen ausgeführt werden kann, die auf einfache Weise in der Messverstärkerschaltung integrierbar sind. So ist es möglich auch bei Vielstellenmessungen ohne großen Aufwand eine hochgenaue Kalibrierung vorzunehmen und dies vorteilhafterweise in kürzester Ausführungszeit. Dabei sind derartige Messverstärkerschaltungen mit präziser Kalibrierung auch an vorhandene Dehnungsaufnehmerschaltungen anschließbar, ohne dass dazu weitere Anschlussleitungen oder veränderte Steckvorrichtungen nötig wären.

Bei einer besonderen Ausführungsart der Kalibrierschaltung ist vorteilhaft, dass durch die Optimierung des Verstärkungsfaktors die Genauigkeit noch zusätzlich erheblich verbessert werden kann. Dabei wird gleichzeitig die Kalibriergenauigkeit insbesondere bei sehr langen Anschlussleitungen verbessert. So ist es bei einer vorbestimmten Leitungslänge möglich, durch die Wahl eines ermittelbaren Verstärkungsfaktors den Restfehler vollständig zu kompensieren.

Die Erfindung wird anhand eines Ausführungsbeispiels, das in der Zeichnung dargestellt ist, näher erläutert. Es zeigen:

Fig. 1: ein vereinfachtes Schaltbild einer Dehnungsmessschaltung und einer Messverstärkerschaltung mit Kalibriervorrichtung nach dem Stand der Technik;

Fig. 2: ein Fehlerdiagramm der Kalibriervorrichtung nach dem Stand der Technik;

Fig. 3: ein vereinfachtes Schaltbild einer Dehnungsmessschaltung und einer Messverstärkerschaltung mit erfindungsgemäßer Kalibriervorrichtung;

Fig. 4: ein Fehlerdiagramm der erfindungsgemäßen Kalibriervorrichtung, und

Fig. 5: ein Fehlerdiagramm für eine optimierte erfindungsgemäße Kalibriervorrichtung.

In Fig. 1 der Zeichnung ist ein vereinfachtes Schaltbild einer Kalibriervorrichtung nach dem Stand der Technik für eine externe Vollbrückenschaltung mit vier Dehnungsmessstreifen dargestellt. Die Anordnung der elektrischen Bauelemente und die Funktion dieser Schaltung wurde bereits vorstehend bei der Würdigung des Standes der Technik im einzelnen erläutert. Dabei ist die Aufnehmerschaltung mit herkömmlichen Dehnungsmessstreifen mit Widerstandswerten von 350 Ω ausgestattet und über eine sechsadrige Anschlussleitung an eine weit entfernte Messverstärkerschaltung angeschlossen, in der die Kalibriervorrichtung integriert ist. Die Kalibriervorrichtung besteht dabei lediglich aus zwei Referenz- bzw. Kalibrierwiderständen $R_{Shunt}$, die über die elektronischen Schalter S2 und S3 an die Speisespannung $U_S$ angeschaltet werden. Dadurch fließt auch über die Messleitungen 1, 4 ein Strom $i_{Shunt}$, der auf diesen - insbesondere bei größeren Leitungswiderständen $R_{wire}$ - zu einem Spannungsabfall führt.

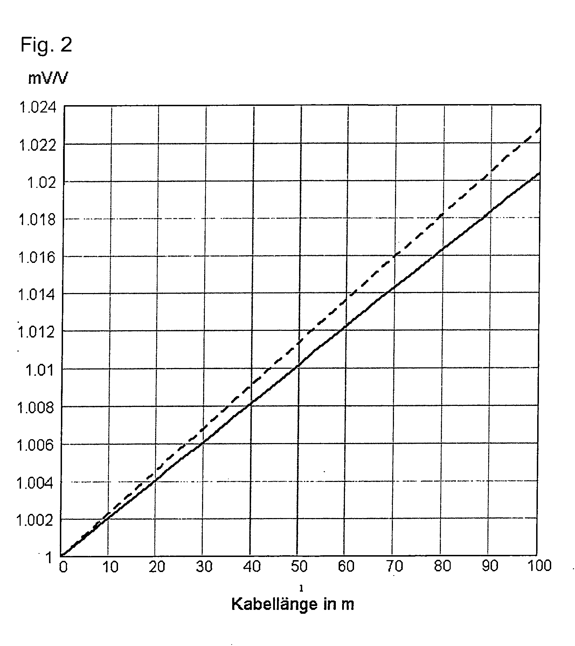

Zu dieser Kalibriervorrichtung nach dem Stand der Technik ist in Fig. 2 der Zeichnung ein Fehlerdiagramm dargestellt, das eine durchgezogene Fehlerkurve bei einer Leitungstemperatur von 20 °C und eine gestrichelte Fehlerkurve bei 50 °C zeigt. Diese Fehlerkurven sind für eine sechsadrige Anschlussleitung aus Kupfer mit einem Querschnitt von 0,5 mm$^2$ zwischen einer externen Aufnehmerschaltung A aus vier gleichartigen Dehnungsmessstreifen a 350 Ω in Vollbrückenschaltung und einer Brückenverstimmung von 1 mV/V zur Kalibrierung erstellt. Dabei sind auf der Ordinate der Kalibrierwert in mV/V und auf der Abszisse die Leitungslänge in m aufgetragen. Aus den Fehlerkurven ist ersichtlich, dass mit zunehmender Leitungslänge durch die Nichtberücksichtigung der Spannungsabfälle auf den Messleitungen 1, 4 das Kalibriersignal linear ansteigt und bei 100 m Leitungslänge einen Fehler von ca. 2% (20 °C) oder 2,3% (50 °C) aufweist. Insbesondere bei längeren Messleitungen sind derartige Messfehler für hinreichend genaue Kalibrierungen von Dehnungsmessschaltungen bzw. Aufnehmern mit Dehnungsmessstreifen häufig nicht akzeptabel.

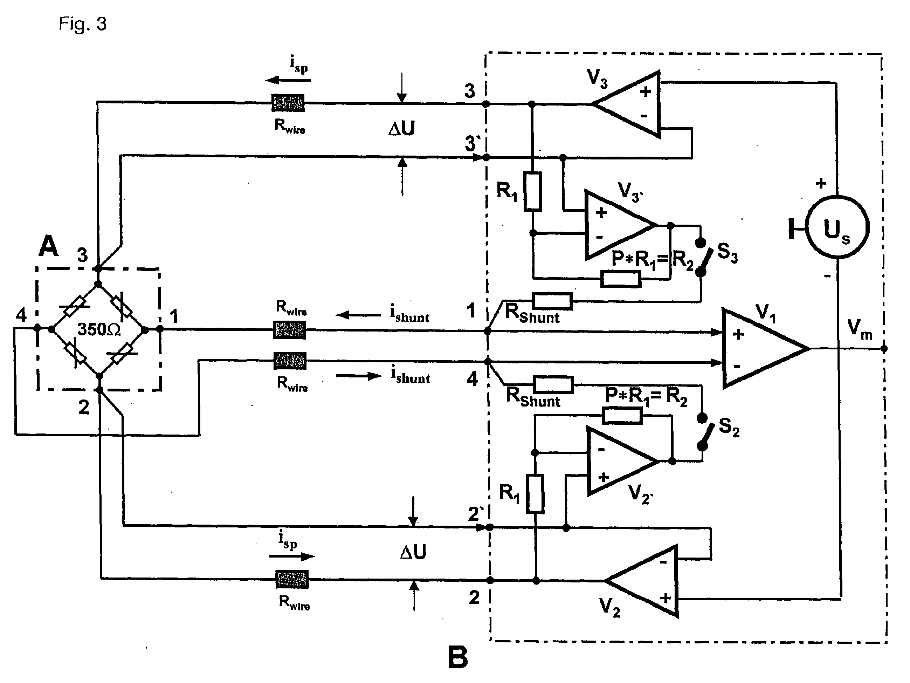

Ausgehend von der Dehnungsmessschaltung A und der Messverstärkerschaltung B nach dem Stand der Technik in Fig. 1 der Zeichnung zeigt die Fig. 3 der Zeichnung eine Vollbrückenschaltung A mit in der Messverstärkerschaltung B integrierter erfindungsgemäßer Kalibrierschaltung, die die Spannungsabfälle auf den Messleitungen 1, 4 kompensiert. Dazu ist zwischen den beiden Speiseleitungen 3, 2 und Fühlerleitungen 3', 2' in jeder Messverstärkerschaltung B bzw. in jedem Messkanal jeweils eine gleichartige Kalibrierschaltung vorgesehen. Diese Kalibrierschaltung besteht im wesentlichen jeweils aus einem Operationsverstärker V3', V2' als elektronisches Bauelement, der den Spannungsabfall $\Delta U$ zwischen den Speiseleitungen 3, 2 und den zugehörigen Fühlerleitungen 3', 2' über einen Widerstand R1 erfasst. Der Widerstand R1 ist auf dem Minuseingang des Operationsverstärkers 3', 2' geschaltet, so dass am Ausgang ein invertiertes Ausgangssignal

$$\frac{U_s}{2} - \Delta U$$ erzeugt wird.

Im Rückkopplungszweig des Minuseingangs des Operationsverstärkers V3', V2' ist noch ein Rückkopplungswiderstand R2 vorgesehen, mit dem der Verstärkungsfaktor P bestimmbar ist. Vorteilhafterweise wird der Verstärkungsfaktor P=1 gewählt, bei dem der Rückkopplungswiderstand R2 gleich R1 ist und an jedem durch den elektronischen Schalter S3, S2 zuschaltbaren Kalibrier- bzw. Shuntwiderstand $R_{Shunt}$ eine um den Spannungsabfall auf den Messleitungen 3, 2 reduzierte Spannung $\left( \frac{U_s}{2} - \Delta U \right)$ anliegt. Bei einer vorgesehenen Brückenverstimmung durch die Kalibrierwiderstände von 1 mV/V Speisespannung beträgt der Kalibrierwiderstand ca. 175 KΩ. Nach Zuschaltung des Kalibrierwiderstands $R_{Shunt}$ durch den elektronischen Schalter S3, S2 liegt nun an den beiden Kalibrierwiderständen eine Spannung von $U_S$-2$\Delta U$, so dass ein Kalibriersignal erzeugt wird, das selbsttätig den Einfluss der Spannungsabfälle auf den beiden Messleitungen 1, 4 ausgleicht und somit den Fehler insbesondere bei längeren Messleitungen weitgehend kompensiert.

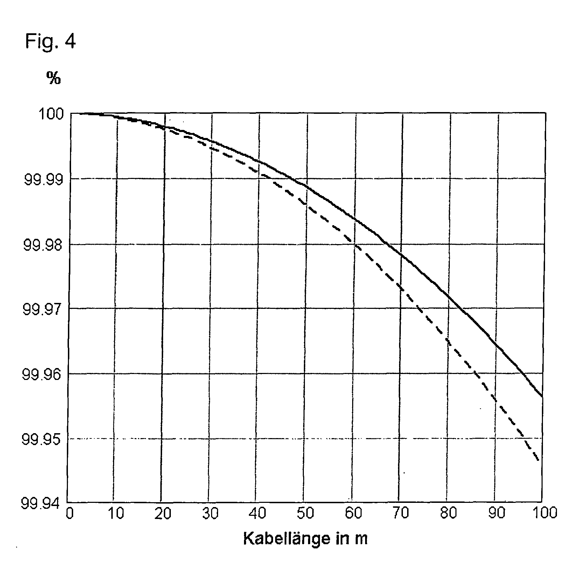

Eine derartige Kompensation des Kalibrierfehlers in Abhängigkeit der Messleitungslänge ist in Fig. 4 der Zeichnung als Fehlerdiagramm dargestellt. Dabei ist zwischen einer externen Vollbrückenschaltung A mit vier Dehnungsmessstreifen von 350 Ω eine sechsadrige Anschlussleitung aus Kupferadern mit 0,5 mm$^2$ Querschnitt vorgesehen, wobei das Kalibriersignal für Leitungslängen bis 100 m aufgetragen ist. Als Kalibriersignal wurde dabei eine Brückenverstimmung von 1 mV/V Speisespannung gewählt. Da bei derartigen mehradrigen Anschlussleitungen alle Einzelleiter etwa gleiche Widerstandswerte $R_{wire}$ aufweisen, ist die Erfassung des jeweiligen Spannungsabfalls $\Delta U$ zwischen den Speiseleitungen 3, 2 und Fühlerleitungen 3', 2' ausreichend, um gleichzeitig auf den gleichen relativen Spannungsabfall auf den Messleitungen 1, 4 zu schließen.

In dem Fehlerdiagramm nach Fig. 4 der Zeichnung ist eine durchgezogene Kurve bei einer Leitungstemperatur von 20 °C und eine gestrichelte Kurve bei 50 °C eingezeichnet. Bei dem Fehlerdiagramm ist auf der Ordinate die Amplitude des Kalibriersignals in % und auf der Abszisse die Leitungslänge in Metern zwischen der externen Vollbrückenschaltung A als Aufnehmerschaltung und der Messverstärkerschaltung B aufgetragen. Aus dem Fehlerdiagramm ist deshalb genau erkennbar, dass der Restfehler bei der erfindungsgemäßen Kalibrierschaltung nach Fig. 3 der Zeichnung bei 100 m Leitungslänge gerade noch -0,04 % bei 20 °C und 0,05 % bei 50 °C beträgt. Gegenüber der Kalibrierschaltung ohne Kompensation der Messleitungswiderstände (Fig. 2), die bei 100 m Leitungslänge über 2% betragen würde, ist dies eine Verbesserung um das 50fache der Messgenauigkeit, das für hochgenaue Messzwecke insbesondere bei Festigkeitsprüfungen an Flugzeugteilen entscheidend ist. Aber auch für andere Dehnungsmessungen an externen Verformungskörpern ist für Messzwecke eine genaue Kalibrierung unter Berücksichtigung der Leitungsspannungsabfälle notwendig.

Bei einer weiteren besonderen Ausbildung der erfindungsgemäßen Kalibrierschaltung V3', V2', R1, R2, $R_{Shunt}$, S2, S3 ist vorgesehen, den Restfehler durch eine Optimierung des Verstärkungsfaktors P noch zusätzlich zu verringern. Dazu wurde mit Hilfe eines Iterationsverfahrens für die vorgesehene erfindungsgemäße Kalibrierschaltung ein Verstärkungsfaktor P = 0,982 errechnet, der den Kalibrierfehler bei Leitungslängen bis zu mindestens 100 m erheblich verringert. Für diesen Verstärkungsfaktor P ergibt sich ein Wert für den Rückkopplungswiderstand R2 von 0,982xR1, der für Leitungslängen von ca. 85 m den Restfehler (20 °C) ganz kompensiert.

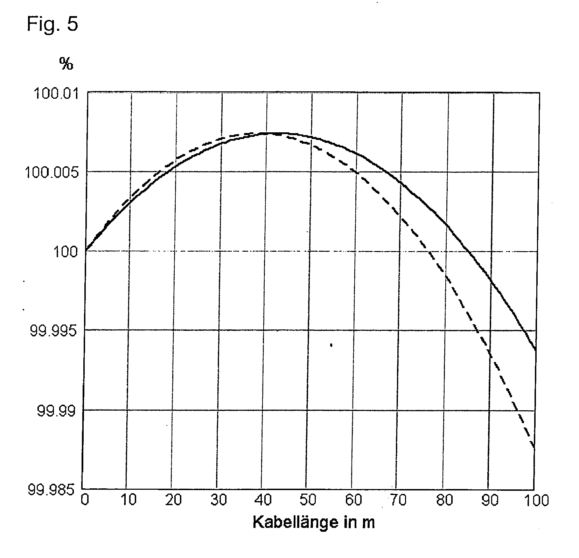

Ein entsprechendes Fehlerdiagramm ist in Fig. 5 der Zeichnung dargestellt, bei dem der Rückkopplungswiderstand einen Wert von R2=0,982xR1 aufweist. In dem Fehlerdiagramm sind wiederum die Fehlerkurven für eine Kupfer-Leitungstemperatur von 20 °C als durchgehende Linie und für eine Kupfer-Leitungstemperatur von 50 °C als gestrichelte Linie aufgetragen. Dabei ist aus der optimierten Fehlerkurve bei 20 °C ein maximaler Fehler bei einer Leitungslänge von 100 m von -0,005% ersichtlich, der etwa um den Faktor 500 besser als bei der Kalibrierschaltung nach dem Stand der Technik nach Fig. 1 der Zeichnung ist und auch den geringen Restfehler nach Fig. 3 der Zeichnung um den Faktor 8 übertrifft. Gleichzeitig wird auch der Temperatureinfluss bei den zwei aufgetragenen Fehlerkurven mindestens um den Faktor 2 verbessert.

Die vorstehend beschriebene Kalibrierschaltung V3', V2', R1, R2, $R_{Shunt}$. S2, S3 kann auch für eine Aufnehmerschaltung A vorgesehen werden, die als Wheatstoneschen Halbbrücke mit zwei Dehnungsmessstreifen geschaltet ist. Dazu sind dann in der Messverstärkerschaltung B zusätzlich zwischen den beiden positiven Spannungseingängen der Verstärkerschaltungen V2, V3 zwei Brückenhilfswiderstände von vorzugsweise 350 Ω bis 10 kΩ geschaltet, die im Diagonalzweig mit dem Minus-Eingang des Messverstärkers V1 verbunden sind. Zur Kalibrierung ist dann nur noch ein zuschaltbarer Kalibrier- oder Shuntwiderstand $R_{Shunt}$ an der Messleitung 1 vorgesehen. Um dann ebenfalls wieder 1 mV/V Kalibriersignal zu erhalten, muss der Shuntwiderstand $R_{Shunt}$ halbiert, d. h. auf ca. 87,5 kΩ, reduziert werden.

In einer weiteren Ausführungsart könnte die Kalibrierschaltung auch als Rechenschaltung ausgebildet sein, die den erfassten Speisespannungsabfall 2ΔU als digitalisierten Messwert erfasst und den fehlerhaft zu großen Kalibriermesswert per Rechnung korrigiert.

**Patentansprüche**

1. Vorrichtung zum Kalibrieren von Dehnungsmessschaltungen (A), die über mehradrige Anschlussleitungen (3, 3', 1, 4, 2, 2') mit einer Messverstärkerschaltung (B) verbunden sind, wobei die Messverstärkerschaltung (B) mindestens eine Spannungsregelschaltung ($V_2$, $V_3$) enthält, die die Spannungsabfälle (ΔU) auf den Anschlussleitungen (3, 3', 1, 4, 2, 2') nachregelt und dass eine Kalibrierschaltung in der Messverstärkerschaltung (B) integriert ist, die aus mindestens einem zuschaltbaren Kalibrierwiderstand ($R_{Shunt}$) besteht, nach dessen Zuschaltung ($S_2$, $S_3$) ein Kalibriersignal erzeugt wird, das als Messsignal einer definierten Messgrößenänderung erfassbar ist und dass die Dehnungsmessschaltungen (A) als Wheatstonesche Halb- oder Vollbrücke mit mindestens zwei oder vier Dehnungsmessstreifen geschaltet sind, **dadurch gekennzeichnet, dass** in der Kalibrierschaltung zusätzliche elektronische Bauelemente ($V_2'$, $V_3'$) vorgesehen sind, die den Spannungsabfall (ΔU) auf mindestens einer Speisespannungsleitung (2, 3) erfassen und den Kalibrierwiderständen ($R_{Shunt}$) eine Spannung ($U_S$-2ΔU) zuführen, die um die Spannungsabfälle (ΔU) auf den Speisespannungsleitungen (2, 3) reduziert ist.

2. Vorrichtung zum Kalibrieren von Dehnungsmessschaltungen nach Anspruch 1, **dadurch gekennzeichnet, dass** jede der Kalibrierschaltungen als elektronisches Bauelement mindestens einen Operationsverstärker (V3', V2') enthält, dessen Eingang zwischen einer Speisespannungsleitung (3, 2) und einer Fühlerleitung (3', 2') geschaltet ist, wobei zwischen dem Minuseingang des Operationsverstärkers (V3', V2') und der Speisespannungsleitung (3, 2) ein Widerstand (R1) und in dessen Rückkopplungszweig ein Rückkopplungswiderstand (R2) geschaltet ist, die so bemessen sind, dass am Ausgang des Operationsverstärkers (V3', V2') die um den Leitungsspannungsabfall (ΔU) auf den Speiseleitungen (2, 3) reduzierte Speisespannung ($U_S$-2ΔU) anliegt, die den Kalibrierwiderstand ($R_{Shunt}$) bzw. den Kalibrierwiderständen zuschaltbar ist.

3. Vorrichtung zum Kalibrieren von Dehnungsmessschaltungen nach Anspruch 1 oder 2, **dadurch gekennzeichnet, dass** die Dehnungsmessschaltung (A) als Vollbrücke mit mindestens vier Dehnungsmessstreifen ausgebildet ist, die mit einer sechsadrigen Anschlussleitung (3, 3', 1, 4, 2, 2') mit der Messverstärkerschaltung (B) verbunden ist und dass parallel für jeden der beiden Brückenzweige ($A_{3,1}$; $A_{4,2}$) eine separate gleichartige Kalibrierschaltung (V2', V3') vorgesehen ist, die jedem Kalibrierwiderstand ($R_{Shunt}$) eine Speisespannung ($U_S$-ΔU) zuführt, die um den Spannungsabfall (ΔU) auf einer der Anschlussleitungen (3, 2) reduziert ist.

4. Vorrichtung zum Kalibrieren von Dehnungsmessschaltungen nach Anspruch 2, **dadurch gekennzeichnet, dass** die Dehnungsmessschaltung (A) als Halbbrücke mit mindestens zwei Dehnungsmessstreifen ausgebildet ist, die mit einer fünfadrigen Anschlussleitung mit der Messverstärkerschaltung (B) verbunden ist und dass parallel zu einem der beiden Brückenzweige ($A_{3,1}$, $A_{4,2}$) eine Kalibrierschaltung vorgesehen ist, die dem Kalibrierwiderstand ($R_{Shunt}$) eine Speisespannung zuführt, die um den Wert des Speisespannungsabfalls (ΔU) auf einer der Anschlussleitungen (3, 2) reduziert ist.

5. Vorrichtung zum Kalibrieren von Dehnungsmessschaltungen nach einem der vorhergehenden Ansprüche, **dadurch gekennzeichnet, dass** die dem Kalibrierwiderstand ($R_{Shunt}$) zuschaltbare reduzierte Speisespannung ($U_S$-ΔU) durch das Verhältnis der Widerstände (R1, R2) bestimmt wird, wobei der Rückkopplungswiderstand (R2) nach einem vorbestimmten Verstärkungsfaktor (P) festgelegt wird, der zwischen 0,90 und 1,0 liegt und insbesondere die Werte R2=0,982xR1 und R2=1xR1 aufweisen kann.

6. Vorrichtung zum Kalibrieren von Dehnungsmessschaltungen nach Anspruch 5, **dadurch gekennzeichnet, dass** bei einer vorgebbaren Leitungslänge der Anschlussleitungen (3, 3', 1, 4, 2, 2') für den Rückkopplungswiderstand R2=PxR1 ein Wert ermittelt wird, beidem der Restfehler vollständig kompensiert ist.

7. Verfahren zur Kalibrierung von Dehnungsmessschaltungen mittels einer der Vorrichtungen nach den Ansprüchen 1 bis 6, **dadurch gekennzeichnet, dass** der Spannungsabfall ($\Delta U$) auf mindestens einer der Speiseleitungen (3, 2) erfasst wird und zum Kalibrieren der Dehnungsmessschaltung (A) dem Kalibrierwiderstand ($R_{Shunt}$) oder -widerständen eine um den Spannungsabfall auf den Speiseleitungen (2, 3) reduzierte Speisespannung ($U_S$-$\Delta U$) zugeführt wird.

Fig. 1

Fig. 2

mV/V

Kabellänge in m

Fig. 3

Fig. 4

Fig. 5

**Europäisches Patentamt**

# EUROPÄISCHER RECHERCHENBERICHT

Nummer der Anmeldung

EP 06 01 0592

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 101 20 982 A1 (HOTTINGER BALDWIN MESSTECHNIK GMBH) 31. Oktober 2002 (2002-10-31) * Zusammenfassung; Anspruch 1; Abbildung 2 * * Absatz [0016] - Absatz [0018] * * Absatz [0021] - Absatz [0027] * * Absatz [0030] * ----- | 1-7 | INV. G01L25/00 G01L1/22 G01R17/10 |
| A | EP 1 253 428 A (HOTTINGER BALDWIN MESSTECHNIK GMBH) 30. Oktober 2002 (2002-10-30) * Zusammenfassung; Abbildungen 1,3 * * Absatz [0011] - Absatz [0014] * * Absatz [0016] - Absatz [0018] * ----- | 1-7 | |

RECHERCHIERTE SACHGEBIETE (IPC)

G01L
G01R

Der vorliegende Recherchenbericht wurde für alle Patentansprüche erstellt

| Recherchenort | Abschlußdatum der Recherche | Prüfer |
|---|---|---|
| München | 11. August 2006 | Helm, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**EP 1 726 936 A1**

**ANHANG ZUM EUROPÄISCHEN RECHERCHENBERICHT
ÜBER DIE EUROPÄISCHE PATENTANMELDUNG NR.**

EP 06 01 0592

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 10120982 | A1 | 31-10-2002 | EP | 1253413 A1 | 30-10-2002 |
| EP 1253428 | A | 30-10-2002 | DE | 10120983 A1 | 28-11-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10120982 A1